# EUROPÄISCHE PATENTSCHRIFT

(11) **EP 1 168 779 B1**
(45) Veröffentlichungstag und Bekanntmachung des Hinweises auf die Patenterteilung: **23.05.2007**
(21) Anmeldenummer: 01114581.0
(22) Anmeldetag: 18.06.2001
(51) Int. Cl.: H04M 1/22, H04M 19/04

(54) **Telekommunikationsendgerät**
Telecommunication terminal
Terminal de télécommunication

(30) Priorität: 20.06.2000 DE 10030273
(43) Veröffentlichungstag der Anmeldung: 02.01.2002
(73) Patentinhaber: ROBERT BOSCH GMBH, 70442 Stuttgart (DE)
(72) Erfinder: Ott, Harald, 71229 Leonberg (DE)

(56) Entgegenhaltungen:
- DE-U- 29 819 562
- DE-U- 29 821 719
- PATENT ABSTRACTS OF JAPAN vol. 1999, no. 02, 26. Februar 1999 (1999-02-26) & JP 10 307682 A (MATSUSHITA COMMUN IND CO LTD;N T T IDO TSUSHINMO KK), 17. November 1998 (1998-11-17)

## Beschreibung

### Stand der Technik

Die Erfindung geht von einem Telekommunikationsendgerät nach der Gattung des Hauptanspruchs aus.

Es ist bereits das Mobiltelefon GSM 909 Dual von Bosch bekannt, bei dem eine Leuchtdiode als Beleuchtungsvorrichtung zur Anrufsignalisierung vorgesehen ist. Die Leuchtdiode ist dabei an derjenigen Gehäusewand dieses Mobiltelefons angeordnet, die auch eine Bedienoberfläche des Mobiltelefons trägt, so dass die Leuchtdiode einen Teil der Bedienoberfläche bildet.

Das Deutsche Gebrauchsmuster DE 298 19 542 U1 zeigt ein Mobilfunkgerät mit einem Multifunktionslichtzeiger. Die Lichtschaltertaste ist dabei auf der Frontseite des Mobiltelefons angebracht. Diese Taste hat zusätzliche Funktionen. Ein an der Seite angebrachte Schalter dient anderen Zwecken.

Das Patent Abstract of Japan Band 1999 Nr. 02, Februar 1999, JP 10 30 76 82 A zeigt ein tragbares Gerät, bei welchem mittels eines Eingabestiftes Informationen übermittelt werden. Die Information wird dabei mittels eines Laserstrahls vom Eingabegerät dem tragbaren Computer mitgeteilt.

Das Deutsche Gebrauchsmuster DE 298 21 719 U1 zeigt ein Mobiltelefon mit integriertem Laserpointer. Hier wird der Laserpointer durch die im Mobiltelefon vorhandenen Bedienelemente, d.h. die Telefontastatur, eingeschaltet.

Die WO 99/51007 A zeigt ein Telekommunikationsendgerät mit einer Beleuchtungsvorrichtung, die gerichtet Licht abstrahlt und die zur Betätigung der Beleuchtungsvorrichtung an der Seitenwand des Geräts eine Taste vorsieht.

### Vorteile der Erfindung

Das erfindungsgemäße Telekommunikationsendgerät mit den Merkmalen des Hauptanspruchs hat demgegenüber den Vorteil, dass die Beleuchtungsvorrichtung gerichtet Licht abstrahlt. Auf diese Weise kann eine Signalisierung bewirkt werden, die nicht ohne weiteres am Telekommunikationsendgerät selbst aber an einer von der Beleuchtungsvorrichtung angestrahlten Fläche sichtbar ist. Durch die gerichtete Lichtabstrahlung ist dabei die angestrahlte Fläche in ihrer Ausdehnung begrenzt und besonders gut von ihrer nichtbeleuchteten Umgebung zu unterscheiden. Dieser Effekt kann je nach Richtwirkung und Beleuchtungsstärke der Beleuchtungsvorrichtung auch bei hellerer Umgebungsleuchtdichte, beispielsweise bei Tageslicht erzielt werden. Je nach Ausrichtung des Telekommunikationsendgerätes bzw. seiner Beleuchtungsvorrichtung kann so ein beliebiger Punkt bzw. eine beliebige begrenzte Fläche für eine Signalisierung angestrahlt werden. Dies ist besonders dann von Vorteil, wenn das Telekommunikationsendgerät selbst nicht direkt einsehbar ist, so dass der Lichtstrahl der Beleuchtungsvorrichtung auf eine einsehbare Fläche gerichtet werden kann.

Durch die in den Unteransprüchen aufgeführten Maßnahmen sind vorteilhafte Weiterbildungen und Verbesserungen des im Hauptanspruch angegebenen Telekommunikationsendgerätes möglich.

Besonders vorteilhaft ist es, dass eine Aktivierung der Beleuchtungsvorrichtung durch Betätigung eines Bedienelementes, insbesondere einer Taste, erfolgt. Auf diese Weise kann die Beleuchtungsvorrichtung auch unabhängig von einer Signalisierung eines vorgegebenen Zustandes des Telekommunikationsendgerätes dazu verwendet werden, eine gewünschte Fläche zu beleuchten, beispielsweise um bei einer Overhead-Projektion oder einer Diaprojektion einen bestimmten Punkt oder eine bestimmte Fläche dieser Projektion durch die gerichtete Beleuchtung der Beleuchtungsvorrichtung zu kennzeichnen. Insbesondere bei Ausbildung des Telekommunikationsendgerätes als Mobiltelefon lässt sich auf diese Weise ein komfortables Zeigegerät für solche Projektionen realisieren, wobei die Funktionalität des Telekommunikationsendgerätes erhöht wird.

Ein weiterer Vorteil besteht darin, dass die Gehäusewand mit der Beleuchtungsvorrichtung von einer Gehäusewand mit einer Bedienoberfläche des Telekommunikationsendgerätes verschieden ist. Auf diese Weise wird der Tatsache Rechnung getragen, dass es bei der erfindungsgemäßen Beleuchtungsvorrichtung nicht darauf an, dass ihre Aktivierung am Telekommunikationsendgerät selbst wahrgenommen werden soll, sondern darauf, dass eine vom Benutzer gewünschte Fläche von der Umgebung unterscheidbar angeleuchtet wird. Dies ist wiederum besonders dann von Vorteil, wenn das Telekommunikationsendgerät wie beschrieben als Zeigerinstrument beispielsweise für Overhead- oder Diaprojektionen verwendet wird. Für die Anordnung der Beleuchtungsvorrichtung kann dann eine Gehäusewand des Telekommunikationsendgerätes gewählt werden, die bei üblicher Halterung des insbesondere als Mobiltelefon ausgebildeten Telekommunikationsendgerätes in einer Hand des Benutzers nicht durch diese Hand verdeckt wird.

Ein weiterer Vorteil besteht darin, dass die Beleuchtungsvorrichtung als Laserdiode ausgebildet ist. Auf diese Weise lässt sich eine Bündelung des von der Beleuchtungsvorrichtung abgestrahlten Lichts und damit die gewünschte Richtwirkung der Lichtabstrahlung von der Beleuchtungsvorrichtung auf einfache Weise erzielen.

Ein weiterer Vorteil besteht darin, dass das Telekommunikationsendgerät drahtlos, insbesondere als Mobiltelefon, ausgebildet ist. Auf diese Weise lässt sich das Telekommunikationsendgerät in besonders bequemer Weise für den Benutzer zusätzlich als Zeigegerät verwenden, mit dem mittels der Beleuchtungsvorrichtung ein Punkt oder eine in ihrer Ausdehnung begrenzte Fläche unterscheidbar von ihrer Umgebung und auch bei Umgebungslicht, wie beispielsweise Tageslicht markiert werden kann. Solche Markierungen können beispielsweise auf Overhead- oder Diaprojektionen erfolgen.

### Zeichnung

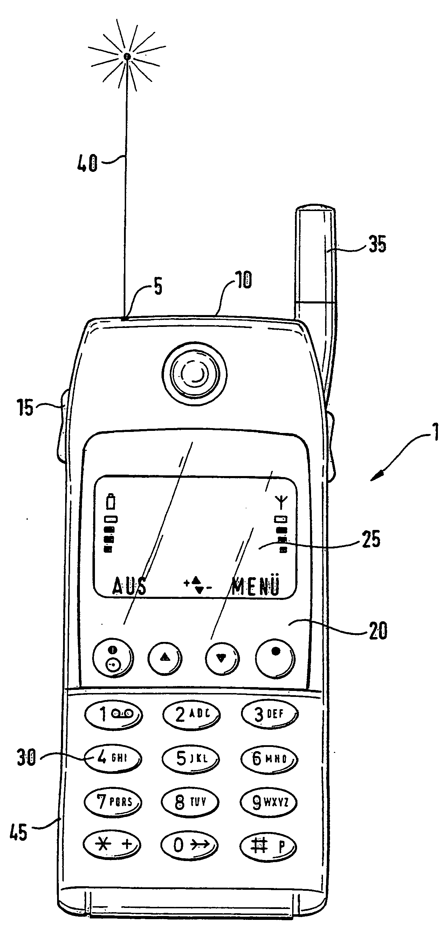

Ein Ausführungsbeispiel der Erfindung ist in der Zeichnung dargestellt und in der nachfolgenden Beschreibung näher erläutert. Es zeigt die einzige Figur ein erfindungsgemäßes Telekommunikationsendgerät in Form eines Mobiltelefons mit einer Beleuchtungsvorrichtung.

### Beschreibung des Ausführungsbeispiels

In der Figur kennzeichnet 1 ein Telekommunikationsendgerät, das beispielhaft als Mobiltelefon ausgebildet ist, jedoch auch als Schnurlostelefon oder drahtgebunden ausgebildet sein kann. Im folgenden soll jedoch beispielhaft angenommen werden, dass das Telekommunikationsendgerät 1 als Mobiltelefon ausgebildet ist. Das Mobiltelefon 1 umfasst dabei eine erste Gehäusewand 20, die eine Bedienoberfläche bestehend aus einer Anzeigevorrichtung 25 und einer Tastatur 30 umfasst. An einer beliebigen Gehäusewand des Mobiltelefons 1 ist eine Beleuchtungsvorrichtung 5 angeordnet. Bei der Beleuchtungsvorrichtung 5 kann es sich beispielsweise um eine Laserdiode handeln. Gemäß dem beschriebenen Ausführungsbeispiel ist die Beleuchtungsvorichtung dabei an einer zweiten Gehäusewand 10 angeordnet, die von der ersten Gehäusewand 20 verschieden ist. Als zweite Gehäusewand 10 wurde dabei diejenige Schmalseite des Mobiltelefons 1 gewählt, die bei einer Antenne 35 des Mobiltelefons 1 angeordnet ist und somit in der Figur die obere Schmalseite des Mobiltelefons 1 darstellt. Die Beleuchtungsvorrichtung 5 soll gerichtet Licht abstrahlen. Daher eignet sich die Verwendung einer Laserdiode ganz besonders für die Beleuchtungsvorrichtung 5, da sie das abzustrahlende Licht bündelt.

Es kann nun vorgesehen sein, dass die Beleuchtungsvorrichtung 5 aktiviert wird, um einen vorgegebenen Zustand des Mobiltelefons 1 zu signalisieren. Der vorgegebene Zustand kann dabei beispielsweise durch einen eingehenden Ruf oder eine eingehende Nachricht, beispielsweise eine eingehende Kurznachricht, gegeben sein. Ist das Mobiltelefon nach dem GSM-Standard (Global System for Mobile Communications) ausgebildet, so kann es sich bei einer solchen Kurznachricht um eine SMS-Kurznachricht (Short Message Service) handeln. Die Beleuchtungsvorrichtung 5 dient somit zur Signalisierung eines eingehenden Rufs und alternativ oder zusätzlich zur Signalisierung einer eingehenden Nachricht. Zusätzlich oder alternativ kann es auch vorgesehen sein, dass die Beleuchtungsvorrichtung 5 aktiviert wird, wenn der Ladezustand eines Akkumulators des Mobiltelefons 1 einen vorgegebenen Wert unterschreitet oder wenn für die Abstrahlung von Signalen über die Antenne 35 ein vorgegebener Wert für die Sendesignalstärke unterschritten wird. Der Vorteil einer solchen gerichteten Abstrahlung zur Signalisierung eines oder mehrerer vorgegebener Zustände des Mobiltelefons 1 besteht darin, dass eine Möglichkeit geschaffen wird, eine optische Signalisierung auch außerhalb des Mobiltelefons 1 selbst zu realisieren. Dies ist besonders dann von Vorteil, wenn das Mobiltelefon 1 selbst nicht einsehbar ist. Das Mobiltelefon 1 kann jedoch beispielsweise bei Ablage auf einem Tisch so ausgerichtet werden, dass durch die Beleuchtungsvorrichtung 5 ein Punkt oder eine in ihrer Ausdehnung begrenzte Fläche beispielsweise an einer Wand von ihrer Umgebung unterscheidbar beleuchtet werden, wobei dieser Punkt oder diese in ihrer Ausdehnung begrenzte Fläche für den Benutzer einsehbar ist, so dass er die Signalisierung wenn schon nicht am Mobiltelefon 1 selbst so doch durch Beleuchtung dieses Punktes oder dieser in ihrer Ausdehnung begrenzten Fläche wahrnehmen kann. Dieser Vorteil ergibt sich in noch stärkerem Maße bei drahtgebundenen Telekommunikationsendgeräten, die erfindungsgemäß mit der Beleuchtungsvorrichtung 5 ausgestattet sind. Drahtgebundene Telekommunikationsendgeräte können aufgrund ihrer Kabelbindung nicht beliebig im Raum angeordnet werden, so dass ihre Anordnung im Raum gewissen Einschränkungen unterworfen ist. Insbesondere können sie in der Regel nicht derart plaziert werden, dass sie von überall her einsehbar sind. In diesem Fall kann durch entsprechende Ausrichtung des von der Beleuchtungsvorrichtung 5 abgegebenen Lichtstrahls, der in der Figur durch das Bezugszeichen 40 gekennzeichnet ist, eine optische Signalisierung auch dort in der beschriebenen Weise wahrgenommen werden, wo das Telekommunikationsendgerät 1 nicht einsehbar ist.

Durch Verwendung des gerichteten Lichtstrahls 40 unter Voraussetzung einer ausreichenden Beleuchtungsstärke der Beleuchtungsvorrichtung 5 kann die Beleuchtung des Punktes oder der in ihrer Ausdehnung begrenzten Fläche durch den Lichtstrahl 40 auch bei Tageslicht von ihrer Umgebung unterscheidbar wahrgenommen werden.

Zusätzlich oder alternativ kann es vorgesehen sein, dass die Beleuchtungsvorrichtung 5 aktiviert wird, wenn ein Bedienelement des Mobiltelefons 1 betätigt wird. Das Bedienelement kann dabei eine Taste der Tastatur 30 sein. Zusätzlich oder alternativ kann auch eine eigene Taste 15 an einer Seitenwand 45 des Mobiltelefons 1 vorgesehen sein, durch deren Betätigung die Beleuchtungsvorrichtung 5 aktiviert wird. Die Taste 15 kann dabei so an der Seitenwand 45 angeordnet sein, dass sie sich bei üblicher Halterung des Mobiltelefons 1 in einer Hand des Benutzers bequem beispielsweise mit dem Zeigefinger der das Mobiltelefon 1 haltenden Hand betätigt werden kann. Durch diese Option wird die Funktionalität des Mobiltelefons 1 erweitert, da es unabhängig von seinem Zustand als Beleuchtungsvorrichtung verwendet werden kann. So kann das Mobiltelefon 1 als Zeigegerät verwendet werden, um einen Punkt oder eine in ihrer Ausdehnung begrenzte Fläche beispielsweise einer Overhead- oder einer Diaprojektion von ihrer Umgebung unterscheidbar zu markieren. Auf diese Weise ersetzt das Mobiltelefon 1 ein separates für diesen Zweck geschaffenes Zeigegerät. Ein um die beschriebene Zeigefunktion erweitertes Mobiltelefon 1 lässt sich daher besonders gut bei Vorträgen oder Besprechungen einsetzen, bei denen solche Projektionen üblicherweise stattfinden. Diese zusätzliche Funktion eignet sich natürlich besonders bei Ausbildung des Telekommunikationsendgerätes 1 als Mobiltelefon wie beschrieben oder auch als Schnurlostelefon. Da die Beleuchtungsvorrichtung 5 an der zweiten Gehäusewand 10, die der Antenne 35 benachbart ist, angeordnet ist, kann das Mobiltelefon 1 für die Zeigefunktion in üblicher Weise in der Hand des Benutzers gehalten werden, wobei die Antenne 35 wie auch der Lichtstrahl 40 vom Körper des Benutzers weg weisen und so im Falle des Lichtstrahls 40 die gewünschte Markierung auf der Projektionsfläche ermöglichen. Entsprechendes gilt bei Ausbildung des Telekommunikationsendgerätes 1 als Schnurlostelefon.

## Patentansprüche

1. Telekommunikationsendgerät (1) mit mindestens einer Beleuchtungsvorrichtung (5) an einer Gehäusewand (10) des Telekommunikationsendgeräts (1), die gerichtet Licht abstrahlt und einer Antenne (35), **dadurch gekennzeichnet, dass** Mittel vorgesehen sind derart, dass eine Aktivierung der Beleuchtungsvorrichtung erfolgt, wenn für die Abstrahlung von Signalen über die Antenne (35) ein vorgegebener Wert für die Sendesignalstärke unterschritten wird.

2. Telekommunikationsendgerät (1) nach Anspruch 1, **dadurch gekennzeichnet, dass** ein eingehender Ruf oder eine eingehende Nachricht signalisiert wird.

3. Telekommunikationsendgerät (1) nach einem der vorherigen Ansprüche, **dadurch gekennzeichnet, dass** eine Aktivierung der Beleuchtungsvorrichtung (5) durch Betätigung eines Bedienelementes, insbesondere einer Taste (15), erfolgt.

4. Telekommunikationsendgerät (1) nach einem der vorherigen Ansprüche, **dadurch gekennzeichnet, dass** die Gehäusewand (10) mit der Beleuchtungsvorrichtung (5) von einer Gehäusewand (20) mit einer Bedienoberfläche (25, 30) des Telekommunikationsendgerätes (1) verschieden ist.

5. Telekommunikationsendgerät (1) nach einem der vorherigen Ansprüche, **dadurch gekennzeichnet, dass** die Beleuchtungavorrichtung (5) als Laserdiode ausgebildet ist.

6. Telekommunikationsendgerät (1) nach einem der vorherigen Ansprüche, **dadurch gekennzeichnet, dass** das Telekommunikationsendgerät (1) drahtlos, insbesondere als Mobiltelefon, ausgebildet ist.

## Claims

1. Telecommunications terminal (1) having at least one illumination apparatus (5) on a housing wall (10) of the telecommunications terminal (1), which emits light directionally, and having an antenna (35), **characterized in that** means are provided such that the illumination apparatus is activated when a predetermined value for the transmission signal strength is undershot for the emission of signals via the antenna (35).

2. Telecommunications terminal (1) according to Claim 1, **characterized in that** an incoming call or an incoming message is signalled.

3. Telecommunications terminal (1) according to one of the preceding claims, **characterized in that** the illumination apparatus (5) is activated by operation of a control element, in particular of a key (15).

4. Telecommunications terminal (1) according to one of the preceding claims, **characterized in that** the housing wall (10) with the illumination apparatus (5) is different from a housing wall (20) with a control interface (25, 30) of the telecommunications terminal (1).

5. Telecommunications terminal (1) according to one of the preceding claims, **characterized in that** the illumination apparatus (5) is in the form of a laser diode.

6. Telecommunications terminal (1) according to one of the preceding claims, **characterized in that** the telecommunications terminal (1) is designed to be wire-free, in particular in the form of a mobile telephone.

## Revendications

1. Terminal de télécommunication (1) comprenant au moins un dispositif d'éclairage (5) sur une paroi (10) du boîtier du terminal de télécommunication (1) qui émet une lumière dirigée, ainsi qu'une antenne (35),
**caractérisé par**
des moyens prévus pour activer le dispositif d'éclairage lorsque l'intensité du signal d'émission pour l'émission de signaux par l'antenne (35), passe en dessous d'une valeur prédéfinie.

2. Terminal de télécommunication (1) selon la revendication 1,
**caractérisé en ce qu'**
un appel entrant ou un message entrant est signalé.

3. Terminal de télécommunication (1) selon l'une des revendications précédentes,
**caractérisé en ce que**
l'actionnement d'un élément de commande, en particulier d'une touche (15), entraîne l'activation du dispositif d'éclairage (5).

4. Terminal de télécommunication (1) selon l'une des revendications précédentes,
**caractérisé en ce que**
la paroi (10) du boîtier comprenant le dispositif d'éclairage (5) est différente d'une paroi (20) du boîtier munie d'une surface de commande (25, 30) du terminal de télécommunication (1).

5. Terminal de télécommunication (1) selon l'une des revendications précédentes,
**caractérisé en ce que**
le dispositif d'éclairage (5) a la forme d'une diode laser.

6. Terminal de télécommunication (1) selon l'une des revendications précédentes,
**caractérisé en ce que**
le terminal de télécommunication (1) est réalisé sans fil, en particulier sous la forme d'un téléphone mobile.
